# EUROPÄISCHE PATENTSCHRIFT

(11) **EP 3 344 493 B1**
(45) Veröffentlichungstag und Bekanntmachung des Hinweises auf die Patenterteilung: **24.04.2019**
(21) Anmeldenummer: 16760693.8
(22) Anmeldetag: 31.08.2016
(51) Int. Cl.: B60N 2/70, B60N 2/68

(54) **SCHUTZELEMENT FÜR EINEN FAHRZEUGSITZ, FAHRZEUGSITZ**
PROTECTION ELEMENT FOR A VEHICLE SEAT, VEHICLE SEAT
ÉLÉMENT DE PROTECTION POUR SIÈGE DE VÉHICULE ET SIÈGE DE VÉHICULE

(30) Priorität: 01.09.2015 DE 102015216704
(43) Veröffentlichungstag der Anmeldung: 11.07.2018
(73) Patentinhaber: Volkswagen Aktiengesellschaft, 38440 Wolfsburg (DE)
(72) Erfinder: JOCKEL, Fabian, 38108 Braunschweig (DE); BAUER, Tina, 38102 Braunschweig (DE)
(86) Internationale Anmeldenummer: PCT/EP2016/070447
(87) Internationale Veröffentlichungsnummer: WO 2017/037077

(56) Entgegenhaltungen:
- DE-A1- 10 239 740
- DE-A1-102006 049 688
- US-A- 2 096 822

## Beschreibung

Die Erfindung betrifft ein planenförmiges Schutzelement für eine Rückenlehne eines Fahrzeugsitzes, mit wenigstens einem einstückig mit dem Schutzelement ausgebildeten Befestigungshaken zur Befestigung des Schutzelements an einer Strebenstruktur des Fahrzeugsitzes, wobei der Befestigungshaken des Schutzelements durch wenigstens eine freigeschnittene und elastisch aus einer Ebene des Schutzelements herausgebogene Lasche des Schutzelements gebildet ist.

Ferner betrifft die Erfindung einen Fahrzeugsitz für ein Kraftfahrzeug mit einer Rückenlehne, die ein derartiges Schutzelement aufweist.

Schutzelemente und Fahrzeugsitze der eingangs genannten Art sind aus dem Stand der Technik bekannt. Aus der Offenlegungsschrift DE 10 2006 049 688 A1 ist bereits ein Schutzelement mit den Merkmalen des Oberbegriffs des Anspruchs 1 bekannt. Das Schutzelement weist eine mittig freigeschnittene Lasche auf, die aus der Ebene des Schutzelements herausbiegbar ist, um an einer Sitzstruktur einer Rückenlehne befestigt zu werden.

Weiterhin zeigt die Offenlegungsschrift DE 42 24 063 A1 einen Fahrzeugsitz, in dessen Rückenlehne ein planenförmiges Schutzelement angeordnet ist, das als gewebte Federstruktur ausgebildet und durch randseitige Metall-Montagebügel, die insoweit Befestigungshaken darstellen, an dem Fahrzeugsitz befestigt ist. Das Schutzelement ist insofern als mehrteiliges Bauteil, bestehend aus dem Gewebe und den Montagebügeln, ausgebildet.

Aus der Offenlegungsschrift US 2015/0032037 A1 ist ein weiteres Schutzelement bekannt, das ebenfalls planenförmig und elastisch verformbar ausgebildet ist, und durch Befestigungshaken an Streben des Fahrzeugsitzes befestigt ist. Die Befestigungshaken sind dabei einstückig mit dem Schutzelement ausgebildet und stehen von diesem rechtwinklig ab, sodass sie jeweils einen Abschnitt einer Strebe zur Befestigung aufnehmen können. In diesem Fall weist das Schutzelement somit eine dreidimensionale Grundstruktur mit einem planenförmigen Grundelement und davon abstehenden Befestigungshaken auf. Ein ähnliches Schutzelement ist auch bereits aus der Offenlegungsschrift US 2013/0119724 A1 bekannt.

Aus der Offenlegungsschrift US 2,096,822 A1 ist außerdem eine Polsterung mit einem Überzug bekannt, der an einem Gestell mithilfe mehrerer Klammern befestigt ist.

Der Erfindung liegt die Aufgabe zugrunde, ein verbessertes Schutzelement zu schaffen, das einen sichereren Halt des Schutzelements an der Strebenstruktur des Fahrzeugsitzes bietet.

Die der Erfindung zugrundeliegende Aufgabe wird durch das Schutzelement mit den Merkmalen des Anspruchs 1 gelöst. Dieses hat den Vorteil, dass seine Verwendung im Vergleich zu bisher bekannten Lösungen besonders variabel ist, weil feststehende Befestigungshaken, die sich nicht mit jedem Bauraum beziehungsweise Fahrzeugsitzdesign vertragen, vermieden werden, wobei dennoch gewährleistet ist, dass eine sichere Befestigung durch die Befestigungshaken des Schutzelements an einem Fahrzeugsitz gewährleistet wird. Erfindungsgemäß ist hierzu vorgesehen, dass die Lasche einen zusätzlichen Rückhalteabschnitt zum Arretieren der Lasche an der Strebenstruktur aufweist. Die Erfindung sieht also vor, dass in dem Schutzelement wenigstens eine Lasche freigeschnitten ist. Damit liegt die Lasche in ihrem Ausgangszustand in der Ebene des planenförmigen Schutzelements, steht von diesem also nicht ab beziehungsweise vor. Aufgrund des Freischnitts, lässt sich die Lasche jedoch aus der Ebene des Schutzelements beziehungsweise aus dem Schutzelement herausbiegen, um dadurch den Befestigungshaken zu bilden. Hierzu muss die Lasche lediglich derart weit herausgebogen werden, dass ein Aufnahmeraum zwischen der Lasche und dem übrigen Schutzelement gebildet wird, in welchen die Strebe eingeführt werden kann. Durch die Erfindung wird erreicht, dass die Lasche nur dann von dem Schutzelement vorsteht, wenn sie benötigt wird. Ist an der Stelle, an welcher die Lasche ausgebildet ist, keine Strebe vorhanden oder keine Befestigung des Schutzelements an dem Fahrzeugsitz vorgesehen, kann die Lasche in ihrer Ausgangsstellung in der Ebene des Schutzelements verbleiben und passt sich somit optimal in den vorhandenen Bauraum des Fahrzeugsitzes ein. Durch den Rückhalteabschnitt ist die Lasche außerdem sicher an der Strebenstruktur derart befestigbar, dass ein versehentliches Lösen des Schutzelements von der Strebenstruktur sicher verhindert wird. Insbesondere ist der zusätzliche Rückhalteabschnitt so ausgebildet, dass er die Strebenstruktur, die zwischen Lasche und Schutzelement aufgenommen wird, hintergreift, sodass die Strebenstruktur an der Lasche außerdem zwischen der Lasche und dem Rückhalteabschnitt gehalten ist. Dadurch ist die Lasche formschlüssig an der Strebenstruktur derart gehalten, dass sie lediglich in Richtung der Strebenstruktur verschiebbar, jedoch nicht quer dazu verlagerbar ist. Zweckmäßigerweise weist das Schutzelement mehrere derartige Laschen auf, die in Abhängigkeit von dem Fahrzeugsitz, an welchem das Schutzelement befestigt werden soll, herausgebogen oder in ihrer Ausgangsstellung gelassen werden. Dadurch wird eine hohe Verwendungsvielfalt des Schutzelements auch bei unterschiedlichen Fahrzeugsitzen ermöglicht und gleichzeitig eine einfache und sichere Montage des Schutzelements gewährleistet. Darüber hinaus wird dadurch, dass die Laschen freigeschnitten werden, eine einfache Herstellung des Schutzelements geboten, die zeit- und kostengünstig durchführbar ist. Auch wird durch die erfindungsgemäße Ausbildung des Schutzelementes erreicht, dass mehrere Schutzelemente, deren Laschen sich in ihrer Ausgangsstellung befinden, einfach durch aufeinanderlegen gelagert und transportiert werden können, wodurch sich die Logistik mit den Schutzelementen vereinfacht.

Gemäss einem Ausführungsbeispiel ist vorgesehen, dass die Lasche zumindest bereichsweise elastisch verformbar ausgebildet ist. Dadurch ergibt sich der Vorteil, dass die Lasche leicht aus ihrer Ausgangsstellung beziehungsweise aus ihrer entspannten Ruhestellung in dem Schutzelement in die den Befestigungshaken bildende Benutzungsstellung herausgebogen werden kann. Durch die Elastizität wird weiterhin erreicht, dass die Montage des Schutzelementes an dem Fahrzeugsitz einfach und spielfrei erfolgen kann.

Erfindungsgemäß ist vorgesehen, dass das Schutzelement insgesamt elastisch verformbar ausgebildet ist, wodurch die elastische Verformbarkeit der Lasche vorteilhaft gewährleistet wird. Zusätzlich ist vorzugsweise vorgesehen, dass das Schutzelement aus einem stichfesten Material gefertigt ist, um eine hohe Sicherheit gegen ein Durchstechen des Fahrzeugsitzes, beispielsweise bei der Verwendung in einem Polizeiwagen oder Taxi, zu gewährleisten.

Gemäß einer vorteilhaften Weiterbildung der Erfindung ist vorgesehen, dass die Lasche bogenförmig freigeschnitten ist. Dadurch werden Ecken oder Kanten vermieden, die ein unerwünschtes Herausbiegen der Lasche bei der Montage zur Folge haben könnten. Darüber hinaus werden Kräfte, die beim elastischen Verformen der Lasche auftreten, durch das Schutzelement vorteilhaft aufgenommen. Darüber hinaus ist durch die Bogenform ein einfaches Einfädeln einer Strebe zwischen die herausgebogene Lasche und das Schutzelement gewährleistet. Insbesondere ist vorgesehen, dass die Lasche zumindest im Wesentlichen U-förmig freigeschnitten ist. Es ergeben sich hierdurch insbesondere die zuvor bereits genannten Vorteile. Darüber hinaus ergibt sich durch die U-Form der Vorteil, dass die Lasche auch bei einem kleineren Radius der Bogenform verhältnismäßig lang ausgebildet sein kann, sodass auch bei einer schmalen Ausbildung der Lasche eine Strebe zwischen Lasche und Schutzelement sicher aufgenommen werden kann.

Im Weiteren ist erfindungsgemäß vorgesehen, dass die Lasche an ihrem freien Ende einen Laschenkopf aufweist, der breiter ist als die übrige Lasche und den Rückhalteabschnitt bildet. Dadurch bildet der Laschenkopf einen Abschnitt, der die Strebe bei der Montage außerdem hintergreifen kann, wodurch die Belastbarkeit der Befestigung durch den von der Lasche gebildeten Befestigungshaken weiter erhöht wird. Der verbreitete Laschenkopf beziehungsweise den Rückhalteabschnitt bildet insbesondere eine Art Widerhaken, der es ermöglicht, die Lasche beispielsweise in ein entsprechendes Gegenstück einzustecken und dort zu verrasten, wie beispielsweise in eine schlitzförmige Öffnung in einem Gehäuseteil des Fahrzeugsitzes. Durch den verbreiterten Laschenkopf wird somit der zusätzliche Rückhalteabschnitt der Lasche auf einfache Art und Weise zur Verfügung gestellt.

Gemäß einer bevorzugten Weiterbildung der Erfindung ist vorgesehen, dass das Schutzelement mindestens ein Paar von zwei der freigeschnittenen Laschen aufweist, wobei die freien Enden der einander gegenüberliegend angeordneten Laschen im entspannten Ruhezustand der Laschen in dem Schutzelement in entgegengesetzte Richtungen weisen. Durch diese Ausbildung des Laschenpaares wird erreicht, dass Aufnahmetaschen gebildet werden, die aus entgegengesetzten Richtungen zugängig sind, sodass, wenn beide Aufnahmetaschen zur Aufnahme einer Strebe des Fahrzeugsitzes verwendet werden, eine höhere Belastbarkeit des Schutzelements durch die verbesserte Befestigung erreicht wird. Insbesondere wird erreicht, dass das Schutzelement verschiebefest an dem Fahrzeugsitz durch die so gebildeten Befestigungshaken angeordnet ist. Insbesondere die elastische Verformbarkeit der Laschen erlaubt dabei dennoch eine einfache Montage des Schutzelements an dem Fahrzeugsitz.

Gemäß einer Weiterbildung der Erfindung ist bevorzugt vorgesehen, dass die zwei Laschen des Laschenpaares beabstandet zueinander angeordnet sind. So kann beispielsweise vorgesehen sein, dass eine Lasche einem Seitenrand und die andere Lasche dem gegenüberliegenden Seitenrand des Schutzelements zugeordnet ist. Auch können die Laschen des Laschenpaares nah zueinander angeordnet sein, um beispielsweise zwei parallel zueinander verlaufende und nah beieinander angeordnete Streben des Fahrzeugsitzes zu greifen.

Weiterhin ist bevorzugt vorgesehen, dass eine Lasche bevorzugt schmaler ausgebildet ist als die andere Lasche des Laschenpaares. Durch die unterschiedlich breit ausgebildeten Laschen wird beispielsweise der Vorteil erreicht, dass eine gebogene Strebe, die U-förmig verläuft, durch beide Laschen des Laschenpaares führbar ist und besonders stabil das Schutzelement an der Strebe arretiert.

Gemäß einer bevorzugten Weiterbildung der Erfindung ist vorgesehen, dass die eine Lasche von zumindest einem Laschenpaar in der anderen Lasche des Laschenpaares ausgebildet ist und den Rückhalteabschnitt bildet. Damit wird die eine Lasche, wenn die andere Lasche aus ihrer Ruhestellung herausgebogen wird, bereits mit aus der Ebene des Schutzelements herausgebogen. Wird anschließend auch die eine Lasche aus ihrer Ruhestellung herausgebogen, kann sie beispielsweise auch parallel zu der Ebene des Schutzelements liegen. Hierdurch ergeben sich weitere Gestaltungsmöglichkeiten für den Befestigungshaken zur Befestigung an dem Fahrzeugsitz, insbesondere an einer Strebe des Fahrzeugsitzes. Insbesondere kann hierdurch ein Hintergreifen der Strebe durch den Rückhalteabschnitt erreicht werden, durch welches ein ungewolltes Lösen des Schutzelements von dem Fahrzeugsitz sicher verhindert wird.

Weiterhin ist bevorzugt vorgesehen, dass das Schutzelement wenigstens zwei gleiche Laschenpaare aufweist, die auf einer Höhe des Schutzelements parallel zueinander angeordnet sind. Damit liegen die Laschenpaare nebeneinander auf einer Horizontalen des Schutzelements beziehungsweise im verbautem Zustand des Fahrzeugsitzes. Hierdurch wird gewährleistet, dass das Schutzelement an dem Fahrzeugsitz im Betrieb nicht verkippt. Gemäß einer bevorzugten Weiterbildung sind noch weitere Laschen oder Laschenpaare, wie sie obenstehend beschrieben wurden, an/in dem Schutzelement ausgebildet.

Der erfindungsgemäße Fahrzeugsitz mit den Merkmalen des Anspruchs 10 zeichnet sich durch das erfindungsgemäße Schutzelement aus. Es ergeben sich hierdurch die bereits genannten Vorteile. Weitere Vorteile und bevorzugte Merkmale ergeben sich aus dem zuvor Beschriebenen sowie aus den Ansprüchen.

Im Folgenden soll die Erfindung anhand von Ausführungsbeispielen näher erläutert werden. Dazu zeigen:
- Figur 1: ein Schutzelement für einen Fahrzeugsitz in einer Draufsicht,
- Figur 2: einen Fahrzeugsitz mit dem darin montierten Schutzelement,
- Figur 3: eine weitere Darstellung des Fahrzeugsitzes,
- Figur 4: einen weiteren Fahrzeugsitz mit dem daran montiertem Schutzelement, und
- Figur 5: den weiteren Fahrzeugsitz in einer weiteren Darstellung.

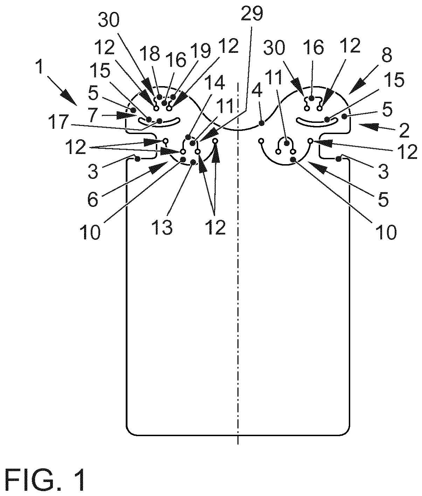

Figur 1 zeigt in einer vereinfachten Draufsicht ein Schutzelement 1 für einen Fahrzeugsitz eines Kraftfahrzeugs. Das Schutzelement 1 ist planenförmig ausgebildet und dient als Abdeckung insbesondere in einer Rücklehne des Fahrzeugsitzes. Das Schutzelement 1 ist dazu beispielswese zwischen einem Polster oder Polsterbezug und einer Lordosenmechanik des Fahrzeugsitzes angeordnet, um das Polster oder den Polsterbezug und auch den Benutzer des Fahrzeugsitzes vor harten Bestandteilen der Lordosenmechanik und insbesondere vor scharfen Kanten der Lordosenmechanik zu schützen und Geräusche zu dämmen. Das Vorsehen planenförmiger Schutzelemente als Lehnenabdeckung beziehungsweise Abdeckung einer Lordosenmechanik ist grundsätzlich bekannt.

Das vorliegende Schutzelement 1 ist aus einem elastischen Material gefertigt, das sich insbesondere an eine Verstellung der Lordosenmechanik anpassen kann und einem Benutzer den höchstmöglichen Komfort auf dem Fahrzeugsitz gewährleistet. Bevorzugt ist das Schutzelement 1 aus einem stichfesten (Sicherheits-)Material gefertigt.

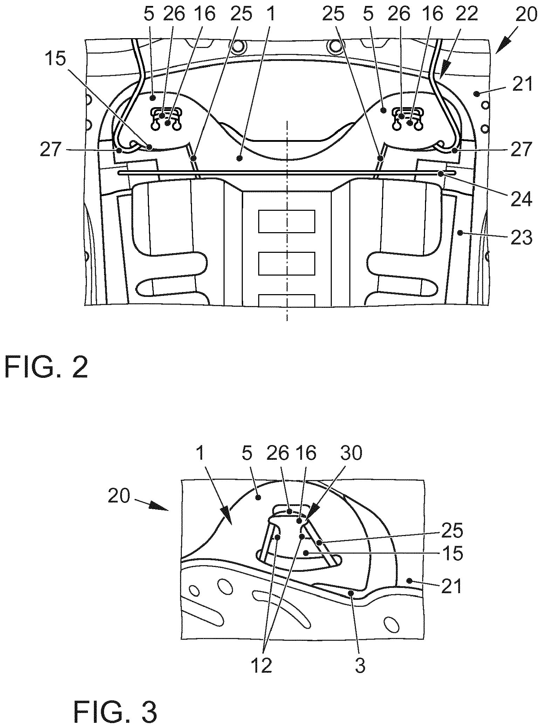

Das Schutzelement 1 weist dabei in der Draufsicht aus Figur 1 eine im Wesentlichen rechteckförmige Kontur auf, mit zwei Längsseiten und zwei im Vergleich dazu kürzer ausgebildeten Breitseiten. An einer der Breitseiten weist das Schutzelement 1 einen Befestigungsabschnitt 2 auf, der zur Befestigung des Schutzelements 1 an einem Fahrzeugsitz, wie er beispielsweise in Figuren 2 bis 5 gezeigt ist, dient.

Der Befestigungsabschnitt 2 weist eine von der Rechteckform des Schutzelements 1 abweichende Form auf. Dazu weist der Befestigungsabschnitt 2 beabstandet zum Rand der Breitseite zwei einander gegenüberliegend ausgebildete Aussparungen 3 auf, durch welche das Schutzelement 1 in seiner Breite bereichsweise verjüngt ist. Damit ist der Befestigungsabschnitt 2 im Vergleich zum übrigen Schutzelement 1 flexibler. Weiterhin weist der Befestigungsabschnitt 2 am Rand seiner Breitseite eine mittige und bogenförmige Vertiefung 4 auf, die sich bis auf die Höhe der Aussparungen 3 in das Schutzelement 1 hinein erstreckt. Dadurch ergeben sich in dem Befestigungsabschnitt 2 zwei Befestigungsteilabschnitte 5, die laschenförmig ausgebildet sind.

Der Befestigungsabschnitt 2 weist weiterhin vier Paare 6, 7, 8 und 9 von Laschen auf, die im Folgenden näher beschrieben werden sollen.

Zunächst soll anhand des Paares 6 die Ausführung der Paare 6 und 7 erläutert werden, die gleich gestaltet sind. Das Paar 6 weist eine erste Lasche 10 und eine zweite Lasche 11 auf. Die Laschen 11 und 10 sind in dem Schutzelement 1 durch jeweils einen Freischnitt ausgebildet, sodass sie letztendlich freigeschnittene Zungen des Schutzelements 1 bilden. Der jeweilige Freischnitt ist dabei bogenförmig ausgebildet, sodass die Laschen 10, 11 eine im Wesentlichen bogenförmige Kontur, insbesondere eine U-förmige Kontur aufweisen. Die Freischnitte weisen an ihren jeweiligen Enden jeweils eine kreisförmige Entspannungsöffnung 12 auf, die gewährleistet, dass dann, wenn die jeweilige Lasche 10, 11 aus der Ebene des Schutzelements 1 elastisch herausgebogen wird, sodass sie vom übrigen Schutzelement 1 vorsteht, die auf das Schutzelement 1 wirkenden Kräfte im Bereich der Enden der Freischnitt nicht zu einem Einreißen des Schutzelements 1 führen.

Gemäß dem vorliegenden Ausführungsbeispiel ist die Lasche 10 breiter ausgebildet als die Lasche 11, wobei die Lasche 11 vollständig in der Lasche 10 liegt und einen zusätzlichen Rückhalteabschnitt 29 bildet. Dabei sind die Laschen 10, 11 derart ausgebildet, dass die Laschen 10,11, wenn sie in ihrem entspannten Ruhezustand in der Ebene des Schutzelements 1 beziehungsweise in dem Schutzelement 1 liegen, mit ihren freien aus dem Schutzelement 1 herausbiegbaren Enden 13 beziehungsweise 14 in entgegengesetzte Richtungen weisen. Die Laschen 10, 11 sind weiterhin derart ausgebildet, dass die Lasche 11 mittig in der Lasche 10 ausgebildet ist. Das Paar der Laschen 6 beziehungsweise 9 ist dabei derart in dem Schutzelement 1 ausgebildet, dass es auf Höhe der Aussparungen 3 in dem Schutzelement 1 liegt, wobei die Entspannungsöffnungen 12 der Freischnitte der Laschen 10 und 11 jeweils auf derselben Höhe des Schutzelements 1 und somit auf einer horizontalen Linie beziehungsweise auf einer Linie parallel zur Breitseite des Schutzelementes 1 liegen.

Das Paar 9 ist dem Paar 6 entsprechend ausgebildet ist, wie bereits erwähnt, sodass das Paar 9 ebenfalls Laschen 10 und 11 aufweist, die wie zuvor beschrieben ausgebildet und angeordnet sind. Das Paar 9 ist beabstandet zu dem Paar 6 zwischen den Aussparungen 3 angeordnet und liegt auf derselben Höhe wie das Paar 6, sodass die Entspannungsöffnungen 12 der Freischnitte beziehungsweise die Entspannungsöffnungen 12 der parallel angeordneten Laschen 10 und 11 jeweils auf der gleichen Höhe beziehungsweise Linie liegen.

Die Paare 7 und 8 weisen ebenfalls jeweils zwei Laschen 15, 16 auf. Die Paare 7 und 8 sind dabei in jeweils einem der Befestigungsteilabschnitte 5 ausgebildet. Auch die Laschen 15 und 16 sind durch jeweils einen Freischnitt in dem Schutzelement 1 ausgebildet.

Der Freischnitt der Lasche 15 ist dabei bogenförmig ausgebildet, wobei der Bogen einen im Verhältnis zur Breite des Freischnitts wesentlich größeren Durchmesser aufweist. Der Freischnitt der Lasche 15 ist dabei im Unterschied zu den Freischnitten der Laschen 16, 11 und 12 vorliegend bevorzugt als Langloch ausgeführt, wobei alternativ auch der Freischnitt der Lasche 15 wie die übrigen Freischnitte mit Entspannungsöffnungen am Ende ausgebildet sein könnte. Die Lasche 15 weist somit ein freies Ende 17 auf, das sich im Vergleich zu den Laschen 11 und 10 weniger weit aus dem Schutzelement 1 herausbiegen lässt. Die Lasche 15 ist insofern zwar ungefähr so breit wie die Lasche 10, jedoch deutlich kürzer ausgebildet.

Die Lasche 16 weist ebenfalls einen im Wesentlichen U-förmigen Freischnitt auf, wobei der Freischnitt am freien Ende 18 der Lasche 16 eine Verbreiterung derart aufweist, dass die Lasche 16 einen verbreiterten Laschenkopf 19 bildet, der also im Vergleich zur übrigen Lasche 16 breiter ausgebildet ist und dadurch einen zusätzlichen Rückhalteabschnitt 30 bildet. Im Unterschied zu den Paaren 6 und 9 liegt die eine Lasche 16 nicht innerhalb der anderen Lasche 15, vielmehr ist die Lasche 16 beabstandet zu der Lasche 17 angeordnet. Die freien Enden 18 und 17 sind dabei jedoch in der Ausgangsstellung beziehungsweise im Entspannten Ruhezustand der Laschen 15, 16 ebenfalls in entgegengesetzte Richtungen weisend ausgerichtet. Dabei ist die Lasche 16 nicht mittig zur Lasche 15 ausgerichtet, sondern leicht versetzt dazu, sodass die Lasche 16 beziehungsweise das Zentrum der Lasche 16 näher zur Mittellängsachse (gestrichelte Linie) des Schutzelements 1 angeordnet ist, als das Zentrum der Lasche 15. Wie bereits erwähnt ist das Paar 8 von Laschen 15 und 16 dem Paar 7 der Laschen 15 und 16 entsprechend ausgebildet. Letztendlich spiegeln sich die Paare der Laschen 7 und 8 beziehungsweise 6 und 5 an der Längsmittelachse des Schutzelements 1.

Durch die vorteilhafte Ausbildung des Schutzelements 1 kann dieses an unterschiedlichen Fahrzeugsitzen auf einfache Weise ohne zusätzliche Befestigungsmittel montiert werden. Im Ruhezustand beziehungsweise im Ausgangszustand des Schutzelements 1 liegen die Laschen aufgrund ihres Freischnitts in dem Schutzelement 1, sodass ihre Oberflächen bündig mit den Oberflächen des Schutzelements 1 abschließen. Dadurch können beispielsweise mehrere Schutzelemente 1 problemlos übereinander gestapelt werden, in dem sie aufeinander gelegt werden. Insbesondere im Vergleich zu Lösungen, bei welchen bekannte Schutzelemente einen dauerhaft vorstehenden Befestigungshaken aufweisen, ist hierdurch eine vorteilhafte Lagerung gewährleistet. Darüber hinaus ist das Schutzelement 1 besonders vorteilhaft in einen Fahrzeugsitz integrierbar, wie an den folgenden Beispielen gezeigt werden soll.

Figur 2 zeigt hierbei ein erstes Ausführungsbeispiel des montierten Schutzelements 1. Dazu zeigt Figur 2 einen Abschnitt eines Fahrzeugsitzes 20 in einer Draufsicht von vorne, wobei von dem Fahrzeugsitz 20 vorliegend nur ein Rahmengestell einer Rückenlehne 21 gezeigt ist. An dem Rahmengstell ist eine Strebenstruktur 22 angeordnet, die sich in eine von dem Rahmengestell gebildete Öffnung 23 hinein erstreckt. Die Strebenstruktur 22 ist zumindest Abschnittweise elastisch verformbar ausgebildet und bietet der von dem Rahmengestell gebildeten Rücklehen21 des Fahrzeugsitzes 20 eine vorteilhafte Elastizität für den Benutzer. Die Strebenstruktur 22 stellt somit letztendlich eine Federung für ein Polster des Fahrzeugsitzes 20 dar. Die Strebenstruktur 22 weist vorliegend eine horizontal verlaufende Querstrebe 24 auf, die sich insofern horizontal an dem Rahmengestells über die Öffnung 23 hinweg erstreckt. An der Quersterbe 24 sind zwei Vertikalstreben 25 fest gemacht, die serpentinen- oder mäanderförmig vertikal nach oben in Richtung des oberen Ende des Rahmengestells verlaufen und dort festgemacht sind. Durch die Serpentinenform erhalten die Vertikalstreben 25 bereichsweise einen S-förmigen Verlauf mit jeweils einer nach oben weisenden gerundeten Spitze 26 und einer nach unten weisenden gerundeten Spitze 27.

Durch Nutzung der Paare 7 und 8 von Laschen 15 und 16 ist das Schutzelement 1 vorteilhaft an der Strebenstruktur 22 festgemacht. Dazu ist das Schutzelement 1 derart montiert, dass die Spitze 26 zunächst unter elastischem herausbiegen der Lasche 15 unter dem Befestigungsteilabschnitt 5 geschoben ist. Dabei ist die Spitze 26 über die Entlastungsöffnungen 12 des Freischnitts der Lasche 16 hinausgeschoben. Die Lasche 16 ist zur Rückseite des Schutzelements 1 herausgebogen, und zwar derart, dass sie die Vertikalstrebe 25 an der Spitze 26 greift. Die Lasche 15 ist somit nach vorne und die Lasche 16 nach hinten aus der Ebene des Schutzelements 1 beziehungsweise aus der Papierebene herausgebogen. Der Rückhalteabschnitt 30 beziehungsweise der verbreiterte Laschenkopf 19 verhakt dabei mit der Spitze 26, sodass das Schutzelement 1 sicher an der Strebenstruktur 22 gehalten ist. Die herausgebogenen Laschen 15,16, insbesondere die schmalere Laschen 16 bilden somit Befestigungshaken zur Befestigung des Schutzelements 1 an dem Fahrzeugsitz 20 beziehungsweise in/an dessen Rückenlehne 21.

Figur 3 zeigt eine vergrößerte Darstellung der Befestigungsteilabschnitte 5 in einer Ansicht von hinten. Hierbei ist gut die nach hinten herausgebogene Lasche 16 und die nach vorne herausgebogene 15 zu erkennen. Der verbreiterte Laschenkopf 19 gewährleistet den sicheren Halt der Lasche 16 hinter der Vertikalstrebe 25. Die Aussparungen 3 erlauben insgesamt eine erhöhte Flexibilität der Befestigungsteilabschnitte 5, sodass diese sicher an die Form der Strebenstruktur 22 anpassbar sind.

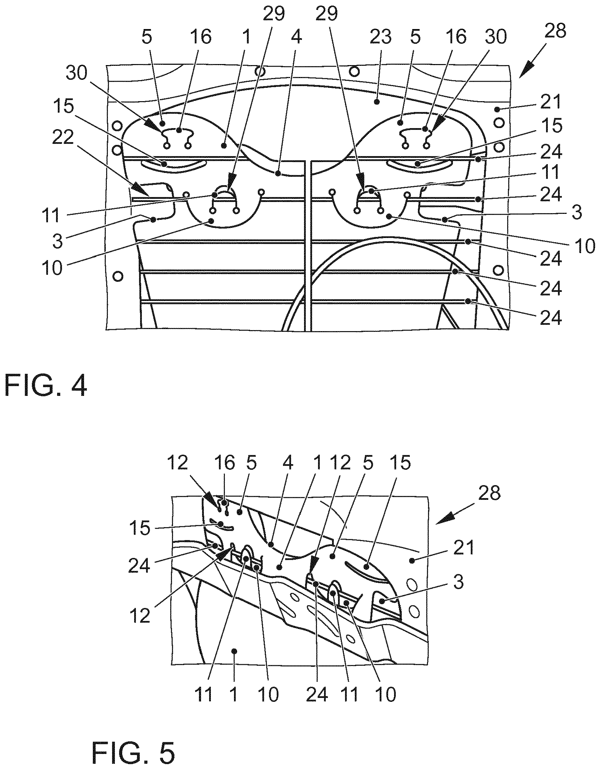

Figur 4 zeigt ein weiteres Ausführungsbeispiel, bei welchem das Schutzelement 1 in eine Rückenlehne 21 eines Fahrzeugsitzes 28, die sich von der Rückenlehne 21 des Fahrzeugsitzes 20 unterscheidet, integriert ist. Aus dem vorhergehenden Ausführungsbeispiel bekannte Elemente sind mit den gleichen Bezugszeichen versehen, sodass insofern auf die oben stehende Beschreibung verwiesen wird. Im Folgenden soll im Wesentlichen nur auf die Unterschiede eingegangen werde.

Im Unterschied zu dem vorhergehenden Ausführungsbeispiel weist die Strebenstruktur 22 eine Vielzahl von Querstreben 24 auf, die sich horizontal über die Öffnung 23 des Rahmens 21 beabstandet zueinander erstrecken. Zur Befestigung des Schutzelements 1 an der Strebenstruktur 22 sind in diesem Fall die Paare 6 und 9 verwendet. Dazu sind die Laschen 10 in der Bildebene nach vorne herausgebogen, und die Laschen 11 nach hinten. Die Laschen 10 sind über eine der Querstreben 24 geschoben, sodass die Querstrebe 24 zwischen der Lasche 10 und dem Schutzelement 1 liegt. Die Laschen 11 sind derart weit nach hinten gebogen und unter die Strebe 24 geführt, dass sie dieselbe Strebe 24 als Rückhalteabschnitt 29 hintergreifen, die von den Laschen 10 überdeckt werden. Dadurch ist das Schutzelement 1 formschlüssig sicher an der Strebenstruktur 22 des Fahrzeugsitzes 28 arretiert.

Figur 5 zeigt in einer vergrößerten Darstellung eine Draufsicht auf die Rückseite des Schutzelements 1 in dem Fahrzeugsitz 28. Dabei ist gut zu erkennen, dass die Strebe 24 zwischen der Lasche 11 und der Lasche 10 einerseits und zwischen der Lasche 10 und dem Schutzelement 1 andererseits gehalten ist, sodass das Schutzelement 1 in seiner Bewegungsfreiheit sowohl nach oben als auch nach unten beschränkt ist, wodurch sich die sichere Befestigung des Schutzelements 1 an dem Fahrzeugsitz 28 ergibt.

Die hier erläuterten Laschen 10, 11, 15 und 16 können somit je nach Anwendungsfall, also je nach Fahrzeugsitz 20 oder 28, an welchem das Schutzelement 1 befestigt werden soll, individuell verwendet oder nicht verwendet werden. Sobald die Laschen 10, 11, 15, 16 aus der Ebene des Schutzelements 1 herausgebogen werden, bilden sie jeweils einen eigenen Befestigungshaken zur Arretierung des Schutzelements 1 an der Strebenstruktur 22. Die Laschen, die nicht aus der Ebene des Schutzelements 1 herausgebogen und insofern zur Befestigung des Schutzelements 1 auch nicht genutzt werden, verbleiben damit in der Ebene des Schutzelements 1, sodass das Schutzelement 1 bis auf die Abschnitte, in welchen die Befestigung erfolgt, flach beziehungsweise eben verbleibt und sich insofern vorteilhaft in den Bauraum des jeweiligen Fahrzeugsitzes 20, 28 einfügt. Insbesondere wird ein Konflikt mit anderen Elementen im Bauraum vermieden.

Das Schutzelement 1 benötigt insbesondere keine weiteren Befestigungselemente und bietet den Vorteil geringerer Lagerkosten, aufgrund der Variantenreduzierung und den flachen beziehungsweise planenförmigen Aufbau im Rohzustand, geringerer Logistikkosten aufgrund der Variantenreduzierung, eines verbesserten Nutzungsgrads von Werkzeugen bei der Herstellung, einer geringeren Montagezeit und verringerter Materialeinzelkosten. Das Schutzelement 1 ist insbesondere vorteilhaft bei der Verwendung als Lehnen- oder Lordosenabdecku ng.

### Bezugszeichenliste

1 Schutzelement
2 Befestigungsabschnitt
3 Aussparung
4 Vertiefung
5 Befestigungsteilabschnitt
6 Paar
7 Paar
8 Paar
9 Paar
10 Lasche
11 Lasche
12 Entspannungsöffnung
13 Ende
14 Ende
15 Lasche
16 Lasche
17 Ende
18 Ende
19 Laschenkopf
20 Fahrzeugsitz
21 Rahmen
22 Strebenstruktur
23 Öffnung
24 Querstrebe
25 Vertikalstrebe
26 Spitze
27 Spitze
28 Fahrzeugsitz
29 Rückhalteabschnitt
30 Rückhalteabschnitt

## Patentansprüche

1. Planenförmiges Schutzelement (1) für eine Rückenlehne eines Fahrzeugsitzes (20,28), mit wenigstens einem einstückig mit dem Schutzelement (1) ausgebildeten Befestigungshaken zur Befestigung des Schutzelements (1) an einer Strebenstruktur (22) eines Fahrzeugsitzes (20, 28), wobei das Schutzelement (1) wenigstens eine freigeschnittene und mit einem freien Ende (13,14,17,18) aus einer Ebene des Schutzelements (1) herausgebogene oder herausbiegbare Lasche (10, 11;15, 16) zur Bildung des Befestigungshakens aufweist, **dadurch gekennzeichnet, dass** die Lasche (10,16) einen Rückhalteabschnitt (29,30) zum Arretieren der Lasche (10,16) an der Strebenstruktur (22) aufweist, dass das Schutzelement (1) aus einem elastisch verformbaren Material gefertigt ist, und dass die Lasche (16) an ihrem freien Ende (18) einen Laschenkopf (19) aufweist, der breiter als die übrige Lasche (16) ausgebildet ist und den Rückhalteabschnitt (30) bildet.

2. Schutzelement nach Anspruch 2, **dadurch gekennzeichnet, dass** das Schutzelement (1) aus einem stichfesten Material gefertigt ist.

3. Schutzelement nach einem der vorhergehenden Ansprüche, **dadurch gekennzeichnet, dass** die Lasche (10, 11; 15, 16) bogenförmig, U- oder V-förmig freigeschnitten ist.

4. Schutzelement nach einem der vorhergehenden Ansprüche, **dadurch gekennzeichnet, dass** das Schutzelement (1) mindestens ein Paar (6-9) mit zwei der freigeschnittenen Laschen (10, 11; 15, 16) aufweist, wobei die freien Enden (13,14,17,18) der einander gegenüberliegenden Laschen (10, 11; 15, 16) des jeweiligen Paares (6-9) in ihrem entspannten Ruhezustand in entgegengesetzte Richtungen weisen.

5. Schutzelement nach Anspruch 4, **dadurch gekennzeichnet, dass** die zwei Laschen (10, 11; 15, 16) des jeweiligen Laschenpaares (6-9) beabstandet zueinander angeordnet sind.

6. Schutzelement nach einem der Ansprüche 4 oder 5, **dadurch gekennzeichnet, dass** die eine Lasche (11, 16) schmaler ausgebildet ist als die andere Lasche (10, 15) des Paares (6-9) von Laschen (10, 11; 15, 16).

7. Schutzelement nach einem der Ansprüche 4 bis 6, **dadurch gekennzeichnet, dass** die eine Lasche (11, 16) von dem mindestens einem Laschenpaar (6-9) in der anderen Lasche (10, 16) desselben Laschenpaares (6-9) ausgebildet ist und den Rückhalteabschnitt (29) bildet.

8. Schutzelement nach einem der Ansprüche 4 bis 7, **dadurch gekennzeichnet, dass** das Schutzelement (1) wenigstens zwei gleiche Laschenpaare (6-9) aufweist, die auf einer Höhe des Schutzelements (1) parallel zueinander angeordnet sind.

9. Fahrzeugsitz für ein Kraftfahrzeug, mit einer Rückenlehne (21), wobei die Rückenlehne (21) ein planenförmiges und elastisch verformbares Schutzelement (1), insbesondere zum Abdecken einer Lordosenmechanik in der Rückenlehne (21), aufweist, **gekennzeichnet durch** die Ausbildung des Schutzelements (1) nach einem der Ansprüche 1 bis 8.

## Claims

1. Tarpaulin-like protection element (1) for a backrest of a vehicle seat (20, 28) comprising at least one fastening hook which is configured integrally with the protection element (1) for fastening the protection element (1) to a strut structure (22) of a vehicle seat (20, 28), wherein the protection element (1) comprises at least one tab (10, 11; 15, 16) which is cut away and which is bent outwardly or is able to be bent outwardly from a plane of the protection element (1) by a free end (13, 14, 17, 18) for forming the fastening hook, **characterized in that** the tab (10, 16) comprises a retaining portion (29, 30) for blocking the tab (10, 16) on the strut structure (22), **in that** the protection element (1) is made from a resiliently deformable material, and **in that** the tab (16) at its free end (18) comprises a tab head (19) which is configured to be wider than the remaining tab (16) and forms the retaining portion (30).

2. Protection element according to Claim 2, **characterized in that** the protection element (1) is made from a puncture-resistant material.

3. Protection element according to one of the preceding claims, **characterized in that** the tab (10, 11; 15, 16) is cut away in an arcuate, U-shaped or V-shaped manner.

4. Protection element according to one of the preceding claims, **characterized in that** the protection element (1) comprises at least one pair (6-9) having two of the cut-away tabs (10, 11; 15, 16), wherein the free ends (13, 14, 17, 18) of the opposing tabs (10, 11; 15, 16) of the respective pair (6-9) face in opposing directions in their relaxed resting state.

5. Protection element according to Claim 4, **characterized in that** the two tabs (10, 11; 15, 16) of the respective tab pair (6-9) are arranged spaced apart from one another.

6. Protection element according to one of Claims 4 or 5, **characterized in that** the one tab (11, 16) is configured to be narrower than the other tab (10, 15) of the pair (6-9) of tabs (10, 11; 15, 16) .

7. Protection element according to one of Claims 4 to 6, **characterized in that** the one tab (11, 16) of the at least one tab pair (6-9) is configured in the other tab (10, 16) of the same tab pair (6-9) and forms the retaining portion (29).

8. Protection element according to one of Claims 4 to 7, **characterized in that** the protection element (1) comprises at least two equal tab pairs (6-9), which are arranged parallel to one another, at the height of the protection element (1).

9. Vehicle seat for a motor vehicle comprising a backrest (21), wherein the backrest (21) comprises a tarpaulin-like and resiliently deformable protection element (1), in particular for covering a lumbar support mechanism in the backrest (21), **characterized by** the embodiment of the protection element (1) according to one of Claims 1 to 8.

## Revendications

1. Élément de protection de forme plane (1) pour un dossier de siège de véhicule (20, 28), comprenant au moins un crochet de fixation réalisée d'une seule pièce avec l'élément de protection (1) pour la fixation de l'élément de protection (1) à une structure de montant (22) d'un siège de véhicule (20, 28), l'élément de protection (1) présentant au moins une patte (10, 11 ; 15, 16) dégagée par découpage et sortie ou pouvant être sortie par pliage par une extrémité libre (13, 14, 17, 18) hors d'un plan de l'élément de protection (1), pour la formation du crochet de fixation, **caractérisé en ce que** la patte (10, 16) présente une portion de retenue (29, 30) pour bloquer la patte (10, 16) sur la structure de montant (22), l'élément de protection (1) est fabriqué en un matériau déformable élastiquement, et **en ce que** la patte (16) présente à son extrémité libre (18), une tête de patte (19) qui est plus large que le reste de la patte (16) et qui forme la portion de retenue (30).

2. Élément de protection selon la revendication 2, **caractérisé en ce que** l'élément de protection (1) est fabriqué en un matériau robuste.

3. Élément de protection selon l'une quelconque des revendications précédentes, **caractérisé en ce que** la patte (10, 11 ; 15, 16) est dégagée par découpage sous forme courbe, en forme de U ou en forme de V.

4. Élément de protection selon l'une quelconque des revendications précédentes, **caractérisé en ce que** l'élément de protection (1) présente au moins une paire (6-9) avec deux des pattes dégagées par découpage (10, 11 ; 15, 16), les extrémités libres (13, 14, 17, 18) des pattes mutuellement opposées (10, 11 ; 15, 16) de la paire respective (6-9), dans leur état de repos détendu, étant tournées dans des directions opposées.

5. Élément de protection selon la revendication 4, **caractérisé en ce que** les deux pattes (10, 11 ; 15, 16) de la paire de pattes respective (6-9) sont disposées à distance l'une de l'autre.

6. Élément de protection selon l'une quelconque des revendications 4 ou 5, **caractérisé en ce que** l'une des pattes (11, 16) est plus étroite que l'autre patte (10, 15) de la paire (6-9) de pattes (10, 11 ; 15, 16).

7. Élément de protection selon l'une quelconque des revendications 4 à 6, **caractérisé en ce que** l'une des pattes (11, 16) de l'au moins une paire de pattes (6-9) est réalisée dans l'autre patte (10, 16) de la même paire de pattes (6-9) et forme la portion de retenue (29).

8. Élément de protection selon l'une quelconque des revendications 4 à 7, **caractérisé en ce que** l'élément de protection (1) présente au moins deux paires de pattes identiques (6-9) qui sont disposées parallèlement l'une à l'autre à la hauteur de l'élément de protection (1).

9. Siège de véhicule pour un véhicule automobile comprenant un dossier (21), le dossier (21) présentant un élément de protection de forme plane (1) et déformable élastiquement, en particulier pour recouvrir un mécanisme de support lombaire dans le dossier (21), **caractérisé par** la réalisation de l'élément de protection (1) selon l'une quelconque des revendications 1 à 8.
